# EUROPÄISCHE PATENTSCHRIFT

(11) **EP 2 194 295 B1**
(45) Veröffentlichungstag und Bekanntmachung des Hinweises auf die Patenterteilung: **28.03.2012**
(21) Anmeldenummer: 09014731.5
(22) Anmeldetag: 26.11.2009
(51) Int. Cl.: F16H 25/22, F16D 28/00, F16D 65/14

(54) **Elektromotorische Antriebseinheit**
Electromotorised drive unit
Unité d'entraînement électromotrice

(30) Priorität: 08.12.2008 DE 102008061075
(43) Veröffentlichungstag der Anmeldung: 09.06.2010
(73) Patentinhaber: Schaeffler Technologies AG & Co. KG, 91074 Herzogenaurach (DE)
(72) Erfinder: Mán, Lászlo, Dr., 77833 Ottersweier-Unzhurst (DE); Burkhart, Dirk, 76889 Klingenmünster (DE); Dreher, Alexander, 76547 Sinzheim (DE)

(56) Entgegenhaltungen:
- WO-A1-2006/133716
- DE-A1- 3 502 222
- US-A- 2 847 869
- US-A- 3 421 383

## Beschreibung

Die vorliegende Erfindung betrifft eine elektromotorische Antriebseinheit gemäß dem Oberbegriff des Patentanspruches 1 zum Betätigen einer Drehmomentübertragungseinrichtung, wie Kupplung oder Bremseinrichtung, mit einer Motoreinheit, einer mit der Motoreinheit verbundenen Stellereinheit, einer mit der Stellereinheit verbundenen Rolleneinheit und einem Trägerelement, wobei die Stellereinheit gegenüber dem Trägerelement bewegbar angeordnet ist.

Derartige elektromotorische Antriebseinheiten wirken zum Betätigen einer Drehmomentübertragungseinrichtung im Regelfall auf Hebelsysteme ein, wie sie beispielsweise aus der DE 10 2004 009 832 A1 bekannt sind. Solche Hebelsysteme sind zwischen zwei Endlagen bewegbar. Endlagen einer Kupplung sind beispielsweise die vollständig geöffnete Lage und die vollständig geschlossene Lage. Die das Hebelsystem betätigende elektromotorische Antriebseinheit kann entsprechend zu diesen Endlagen der Drehmomentübertragungseinrichtung ebenfalls Endanschläge zur Begrenzung des Bewegungsweges der Stellereinheit ("Stellerweg") aufweisen. Diese Endanschläge werden regelmäßig auch zur Plausibilisierung der Aktorposition (nachfolgend auch als "Referenzieren" bezeichnet) verwendet.

Gerade bei Doppelkupplungen ist eine wesentliche Sicherheitsanforderung an ein System zum Betätigen der Doppelkupplung das passive Öffnen bei Stromausfall. Diese Sicherheitsanforderung nach einem selbstöffnenden Doppelkupplungssystem ("normally open") hat für die entsprechende Betätigungsaktorik zur Folge, dass die mechanische Einzelübersetzungen im Betätigungsaktor nicht selbsthemmend sein dürfen. Dies wiederum bedeutet, dass eine Motoreinheit, wie ein Elektromotor, im Normalbetrieb die Kupplung aktiv durch Dauerbestromung geschlossen halten muss und daß immer eine rückstellende Kraft auf die elektromotorische Antriebseinheit wirkt. Entsprechend wirkt an der vorgenannten Stellereinheit immer eine rückstellende Kraft, welche die Stellereinheit gegen den hinteren festen Endanschlag drängt, wenn der Elektromotor nicht bestromt wird.

Die Sicherheitsanforderung nach einem "passives Öffnen" bedeutet außerdem, daß bei einem Stromausfall oder einem Reset des Steuergerätes die Rolleneinheit aus der maximalen vorderen Endlage bei geschlossener Kupplung ohne Gegenbestromung des Elektromotors aufgrund der Rückstellkraft ungebremst mit hoher Dynamik an den hinteren festen Endanschlag anschlägt.

Um ein besseres Regelverhalten zu erreichen, werden bei den Antriebseinheiten die Reibhysteresen reduziert. Eine Reduzierung der Reibhysteresen zum besseren Regelverhalten führt aber zu einer noch höheren Dynamik der Rolleneinheit und damit zu einer noch gesteigerten Kraft auf den hinteren festen Endanschlag.

Außerdem ist der hintere feste Endanschlag auf eine bestimmte Lastwechselzahl beim Referenzieren auszulegen.

Der hintere feste Endanschlag muss dementsprechend stabil ausgelegt werden.

Die Stabilitätsanforderung an den hinteren festen Endanschlag nach einer höheren Anschlagfestigkeit aufgrund der vorgenannten Dynamik und aufgrund der geforderten Lastwechselzahlen beim Referenzieren sowie beim passiven Öffnen ist jedoch aufgrund von Bauraumvorgaben nur eingeschränkt umsetzbar.

Weiterhin ist aus der US 2,847,869 ein Trägheitseffekte nutzender Linearaktor bekannt, welcher eine als Trägheitselement wirkende Mutter, die über einen E-Motor beschleunigt wird, und ein Stellelement aufweist. Zwischen Mutter und Gehäuse des E-Motors ist ein elastischer Endanschlag vorgesehen.

Es ist eine Aufgabe der vorliegenden Erfindung, die elektromotorische Antriebseinheit der vorgenannten Art dahingehend zu verbessern, dass die Wirkung der Rückstellkraft auf die elektromotorische Antriebseinheit verringert werden kann.

Diese Aufgabe wird erfindungsgemäß gelöst durch eine elektromotorische Antriebseinheit zum Betätigen einer Drehmomentübertragungseinrichtung, wie Kupplung oder Bremseinrichtung mit den Merkmalen des Patentanspruches 1. Diese umfasst eine Motoreinheit, einer mit der Motoreinheit verbundenen Stellereinheit, einer mit der Stellereinheit verbundenen Rolleneinheit und ein Trägerelement, wobei die Stellereinheit gegenüber dem Trägerelement bewegbar angeordnet ist, und wobei einer Bewegungsweg der Stellereinheit in Richtung Motoreinheit durch einen elastischen Endanschlag zur Reduktion der Anschlagslasten begrenzt ist. Dabei besteht der Endanschlag aus einem elastisch vorgespannten Element, das am Trägerelement abgestützt ist. Als elastisches Element kann insbesondere ein Ring oder mehrere Ringe aus einem elastischen Kunststoff, aus Gummi oder aus einem anderen (teil- oder voll-) elastischen Material vorgesehen sein.

Dabei kann das elastische Element über einen Stützring vorgespannt werden, der am Trägerelement zumindest axial fixiert ist. Gerade in der Ausbildung als vorgespanntes elastisches Element (insbesondere als ein Federanschlag) kann die hohe Öffnungsdynamik, z. B. beim passiven Öffnen und aufgrund des im Regelfall begrenzten Bauraumes, aufgefangen und die kinetische Energie (teilweise) zwischengespeichert werden. Die weitgehende Reduktion der Anschlagslast des hinteren Endanschlages ist auch deshalb besonders hilfsreich, da dieses das Auslegungskriterium der in den elektromotorischen Antriebseinheiten eingesetzten Spindeln darstellt. Eine Reduktion dieser Kraft ist dementsprechend notwendig, um die Dauerhaltbarkeit der Aktorik zu gewährleisten. Die Vorspannung dient außerdem dazu, den Referenziervorgang von äußeren Einflüssen, wie Temperaturänderungen, unabhängig zu machen. Bei tieferen Temperaturen steigt die zum Bewegen der Stellereinheit notwendige Kraft an (beispielsweise aufgrund erhöhter Zähigkeit des Schmiermittels). Die Stellereinheit trifft dann mit dieser erhöhten Kraft auf das elastische Element. Aufgrund der erhöhten Kraft würde das elastische Element stärker verformt werden als bei hohen Temperaturen. Der Referenzierpunkt verschiebt sind daher bei tiefen Temperaturen. Dies kann durch eine geeignete Wahl der Vorspannkraft vermieden werden. "Geeignet" bedeutet in diesem Zusammenhang, daß auch bei einer erhöhten Kraft zum Bewegen der Stellereinheit, z.B. bei tiefen Temperaturen, das elastische Element nur unwesentlich verformt wird. Der Referenzierpunkt bleibt daher im Wesentlichen konstant. Das elastische Element verformt sich daher erst oberhalb der für den Referenziervorgang auch bei ungünstigen Umgebungsbedingungen (wie tieferen Temperaturen) notwendigen Kraft (d.h. im Betrieb der Antriebseinheit).

Des Weiteren kann der Stützring verdrehsicher am Trägerelement angeordnet und/oder in radialer Richtung vorgespannt sein.

Gemäß einem weiteren besonders bevorzugten Ausführungsbeispiel ist als elastisches und insbesondere auch vorgespanntes Element ein ringförmiges Dichtungselement, eine Tellerfeder oder mehrere in Reihe geschalteten Tellerfedern vorgesehen.

Zudem kann die Stellereinheit jedenfalls teilweise im Trägerelement bewegbar aufgenommen sein, so dass das Trägerelement als Führungselement für die Stellereinrichtung wirkt. Außerdem kann die Getriebeeinheit einen Gewindetrieb aufweisen, der in der Stellereinheit aufgenommen ist, wobei die Stellereinheit im Trägerelement bewegbar aufgenommen und über den Gewindetrieb antreibbar ist.

Außerdem kann ein (weiterer) Endanschlag in Richtung der Rolleneinheit vorgesehen sein. Dieser weitere Endanschlag in Richtung der Rolleneinheit kann elastisch abgestützt und/oder elastisch vorgespannt sein.

Die vorliegende Beschreibung zeigt zudem ein Betätigungssystem zum Betätigen einer Drehmomentübertragungseinrichtung, insbesondere für Doppelkupplungen, mit einem Hebelaktor mit zumindest einer elektromotorischen Antriebseinheit, wie vorangestellt.

Die vorliegende Erfindung wird nachfolgend anhand bevorzugter Ausführungsbeispiele in Verbindung mit den zugehörigen Figuren näher erläutert. In diesen zeigen:
- Fig. 1: Einen Schnitt einer Prinzipdarstellung einer elektromotorischen Antriebseinheit ohne einen elastischen und vorgespannten Endanschlag,
- Fig. 2: eine weitere Ansicht der elektromotorische Antriebseinheit nach Fig. 1
- Fig. 3: eine Prinzipdarstellung einer elektromotorische Antriebseinheit, welche den vorliegend vorgeschlagenen elastischen und vorgespannten Endanschlag zur Reduktion der Anschlagslasten aufweist,
- Fig. 4: ein Schnitt gemäß Schnittebene A-A aus Fig. 3,
- Fig. 5: ein Schnitt gemäß Schnittebene E-E nach Fig. 3, und
- Fig. 6: eine Federkennlinie, welche den Kraft-Weg-Verlauf mit und ohne elastischen und vorgespannten hinteren Endanschlag zeigt.

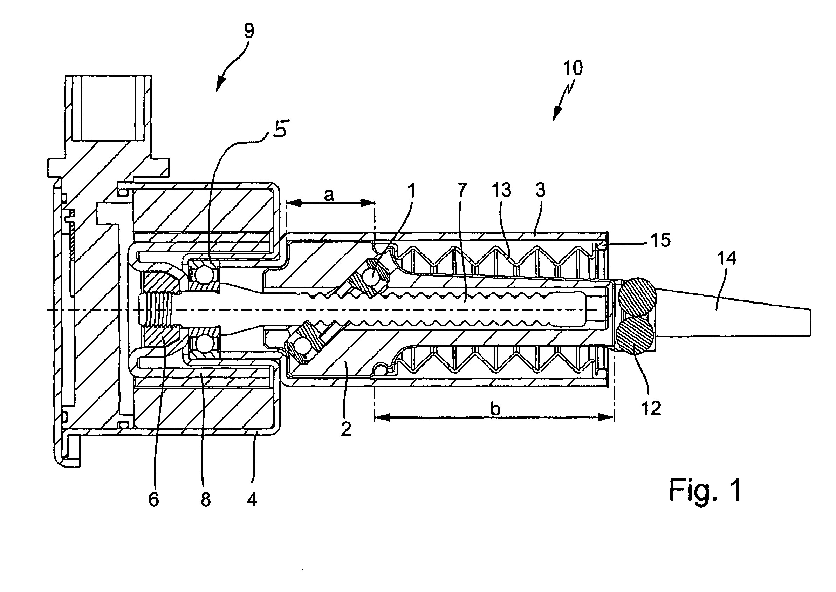

Fig. 1 zeigt einen Schnitt einer Prinzipdarstellung einer elektromotorischen Antriebseinheit als ein allgemeines Beispiel für solche Antriebseinheiten, bei denen der vorliegende vorgespannte elastische Endanschlag zur Reduktion der Anschlagslasten verwendet werden kann. Die Lehre der vorliegenden Anmeldung ist ausdrücklich nicht auf diese Ausbildung dieser elektromotorischen Antriebseinheit beschränkt. Vielmehr können auch andere Antriebseinheiten mit einem elastischen und vorgespannten Endanschlag versehen werden, beispielsweise die elektromotorische Antriebseinheit gemäß der DE 10 2004 009 832 A1 der Anmelderin.

Fig. 1 zeigt eine Motoreinheit 9, welche im Wesentlichen von einem Elektromotor ("E-Motor") gebildet ist, der von einem nach innen gezogenen topfförmigen Gehäuse 4 umhüllt ist. Außerdem kann die Motoreinheit eine entsprechende Steuerung- und Leistungselektronik aufweisen.

Das Gehäuse umhüllt aufgrund dessen nach innen gezogener topfförmiger Ausbildung auch den Rotor 8 des E-Motors. Der Rotor 8 des E-Motors ist mit einer Motorgetriebewelle 7 (auch als Spindelwelle bezeichnet) fest verbunden. Die Motorgetriebewelle 7 ist in axialer und radialer Richtung über ein im Motor angeordnetes Festlager 5 am Gehäuse 4 gelagert. So ist die äußere Lagerschale des Festlagers 5 mit dem Motorgehäuse 4 und die innere Lagerschale auf einem Bund der Motorgetriebewelle verpresst. Der Rotor 8 ist zwischen einem Bund an der Motorgetriebewelle 7 und der Gewindemutter 6 reibschlüssig verklemmt. Es entsteht, wie Fig. 1 entnehmbar, also ein Kraftschluss zwischen Gewindemutter, Rotor 8, Lagerinnenring des Festlagers 5 und Bund der Spindelwelle 7.

Die Motorgetriebewelle 7 ist Teil eines Gewindetriebes und für diese Funktion entsprechend ausgebildet und mit einem schräggestellten Lager 1 ("Spindellager") versehen, wobei ein Innenring des Lagers an der Spindelwelle anliegt und wobei ein Außenring des Lagers an einem Getriebegehäuse 2 anliegt. Das Getriebegehäuse 2 ist die "Stellereinheit" im Sinne der vorliegenden Anmeldung.

Am Ende des Getriebegehäuses 2 (der Stellereinheit) ist eine Rolleneinheit 12 befestigt. Die äußere Form des Getriebegehäuses ist vorliegend stufenartig ausgeführt, so dass dessen Gesamtlänge in axialer Richtung in zwei Teilbereiche A und B unterteilt wird, deren Mantelfläche unterschiedliche Querschnittsformen aufweisen können. In dem vorliegenden Ausführungsbeispiel ist der Teilbereich A zylindrisch ausgebildet und weist einen Durchmesser auf, der an einen Innendurchmesser eines das Getriebegehäuse 2 radial umhüllenden Führungsrohres 3 angepasst ist. Das Führungsrohr 3 ist ein Ausführungsbeispiel des "Trägerelementes" im Sinne der vorliegenden Anmeldung, wobei das Trägerelement nicht auf eine Form im Sinne eines Führungsrohres beschränkt ist, sondern eine Vielzahl unterschiedlichen Formen abhängig von der jeweiligen Ausbildung des Getriebegehäuses (d. h. der Stellereinheit) annehmen kann. Vorliegend fungiert die Mantelfläche im Teilbereich A des Getriebegehäuses 2 zusammen mit der Innenfläche des Führungsrohres 3 als Gleitflächen. Die Grundform des Teilbereiches B ist ebenfalls zylindrisch ausgebildet, wobei allerdings der Teilbereich B über seine Gesamtlänge zur Zylinderachse parallel verlaufende Flächen aufweist, und wobei diese Planflächen zur An- und Auflage eines nicht dargestellten Hebelsystems zur Kupplungsbetätigung bzw. zur Bremseinrichtungsbetätigung dienen.

Das in Richtung Rolleneinheit 12 zeigende Ende des Führungsrohres 3 (des Trägerelementes) weist einen nach innen gerichteten Bund 15 auf. In diesem Bund 15 wird ein Ende eines Faltenbalgens 13 eingeclipst. Das gegenüberliegende Ende des Faltenbalgens 13 ist am Umfang des Getriebegehäuses 2 (der Stellereinheit) formschlüssig aufgenommen.

Das Führungsrohr 3 (d. h. das Trägerelement) ist an seinem motorseitigen Ende kraftschlüssig und/oder formschlüssig mit dem Motorgehäuse 4 verbunden. Eine kraftschlüssige Verbindung kann beispielsweise mittels Kleben, Schweißen, Verstemmen oder ähnlich ausgeführten Verbindungsmöglichkeiten realisiert werden.

Bei einer Bestromung des Elektromotors wird der Motor in Rotationsbewegung versetzt. Diese Rotationsbewegung des Rotors 8 wird auf die mit dieser zumindest kraftschlüssig verbundenen Motorgetriebewelle 7 übertragen. Durch Reibschluss wird dabei die innere Lagerschale des Spindellagers 1 ebenfalls in eine Drehbewegung versetzt, die dazu führt, dass der Lagerinnenring und damit der Lageraußenring und damit das Getriebegehäuse (d.h. die Stellereinheit) eine axiale Bewegung ausführen. Je nach Bestromungsrichtung wird somit das Getriebegehäuse 2 aus dem Führungsrohr oder in dieses hinein bewegt, wobei es über seine Gleitflächen im Teilbereich A im Führungsrohr abgestützt und geführt ist.

Das Führungsrohr weist im Bereich der Rolleneinheit 12 seitliche Verlängerungen auf, die als Führungsflächen 14 für die Rolleneinheit während der Bewegung des Getriebegehäuses fungieren. Auf die Führungsflächen 14 kann auch verzichtet werden, wobei sich dann die Stellereinheit 2 an der Innenfläche des Führungsrohres 3 und dem Kontaktpunkt zwischen Rolleneinheit 12 und Hebelsystem abstützt.

Eine axiale Bewegung des Getriebegehäuses (d.h. eine Bewegung in Längsrichtung des Führungsrohres 3) wird begrenzt durch zwei Anschläge. Motorseitig wird der Anschlag beim Ausführungsbeispiel nach Fig. 1 durch eine als Stufe ausgebildete Innenkontur des Führungsrohres 3 gebildet. In Richtung Rolleneinheit wird der Anschlag durch den Bund 15 des Führungsrohres 3 gebildet, wobei in dieser Stellung zwischen dem Bund und dem Getriebegehäuse der Faltenbalg 13 zusammengedrückt wird. Demnach schlägt das Getriebegehäuse 2 zusammen mit dem Falkenbalg 13 am Bund 15 des Führungsrohres 3 an.

Anstelle des Anschlages 15 kann auch ein separater Abstützring (wie beispielsweise ein Schnappring) in das Führungsrohr 13 eingesetzt werden.

Anstelle des Faltenbalges kann auch eine Spaltdichtung zwischen der Mantelfläche der Stellereinheit und der Innenfläche des Führungsrohres vorgesehen sein.

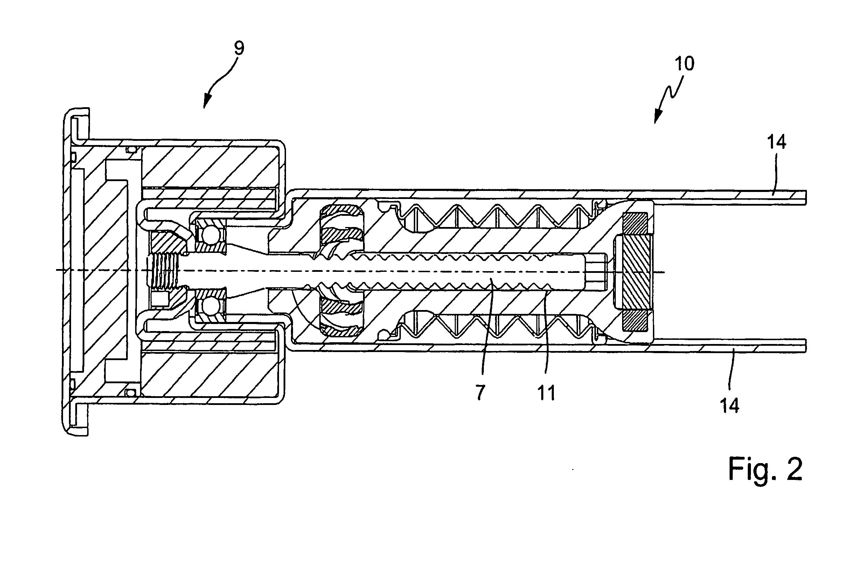

Fig. 2 zeigt den prinzipiellen Aufbau der elektromotorischen Antriebseinheit nach Fig. 1 in einer anderen Schnittdarstellung, wobei eine andere Art der Lagerung erkennbar ist. Der Ort der Lagerung befindet sich bei diesem Ausführungsbeispiel im Endbereich der Motorgetriebewelle 7 und wird durch seine seitliche Abstützung 11 am Getriebegehäuse 2 hergestellt. Somit stützt sich die Motorgetriebewelle 7 in diesem Ausführungsbeispiel während ihrer Drehung radial abwechselnd über das Spindellager 1 am Getriebegehäuse 2 und im Endbereich am Getriebegehäuse 2 ab.

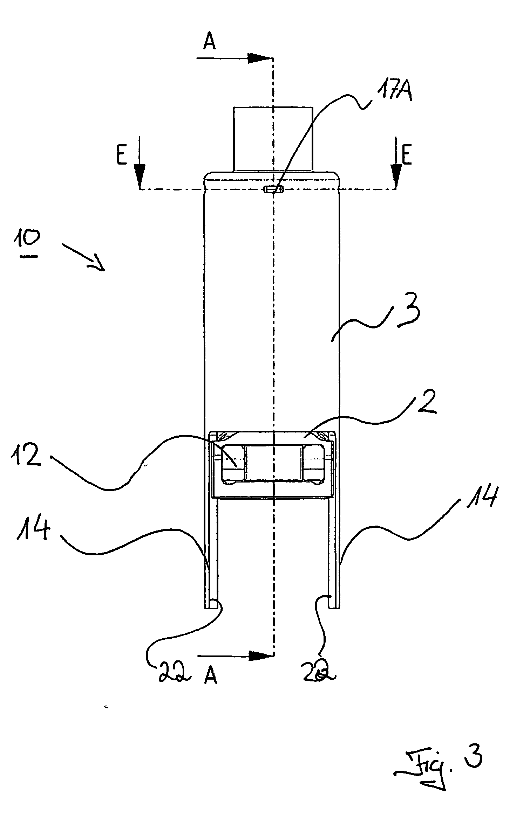

Beim Ausführungsbeispiel gemäß den Fig. 3 bis 5 wurden die in den Fig. 1 und 2 gezeigten Ausführungsbeispiel der elektromotorischen Antriebseinheit dahingehend abgeändert, dass ein elastischer und vorgespannter Endanschlag im Bereich der Stufe des Getriebegehäuses (der Stellereinheit) vorgesehen ist zur Reduktion der Anschlagslasten und zur Verbesserung der Reproduzierbarkeit des Referenzierens.

Durch diesen federvorgespannten Endanschlag kann die Anschlagslast bei gleichem Federweg reduziert werden. Als Federelement wird vorzugsweise eine Tellerfeder eingesetzt.

Bei einem bestimmten Tellerhöhen-Dickenverhältnis wird ein nahezu waagerecht verlaufender Kennlinienteil erreicht. Durch eine Änderung der Einbaulage kann dieser Bereich zum Speichern der Anschlagsenergie verwendet werden.

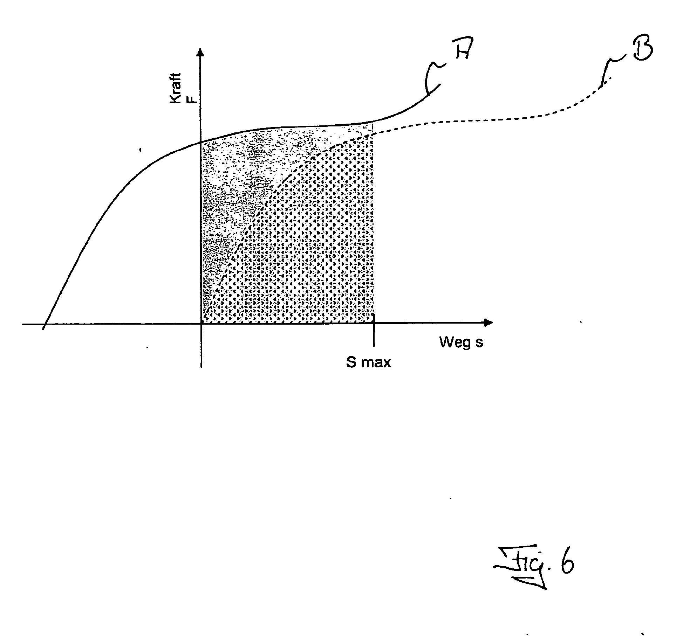

Im Vergleich zu einer nicht vorgespannten Feder wird dadurch eine höhere Speicherenergie erreicht, wie sich aus den Kurven A und B gemäß Fig. 6 ergibt. Hierbei zeigt Kurve A den Verlauf mit vorgespannter Feder und Kurve B den Verlauf ohne vorgespannte Feder, wobei sich unterhalb der Kurven A und B die jeweils gespeicherte Energie ergibt.

Im Detail zeigt Fig. 3 das Führungsrohr 3 (das Trägerelement), welches dann mit dem Gehäuse 4 der Motoreinheit 9 verbunden wird. Das Trägerelement wirkt daher als "umgebungsfester Getriebemodulträger".

Im Trägerelement ist die Rolleneinheit 12 aufgenommen, wobei sich über die Bereiche 14 eine Führung der Rolleneinheit 12 ergibt, wenn diese aus dem Führungsrohr 3 heraustritt. Eine relative Führung ergibt sich außerdem über die Führungsschienen 22.

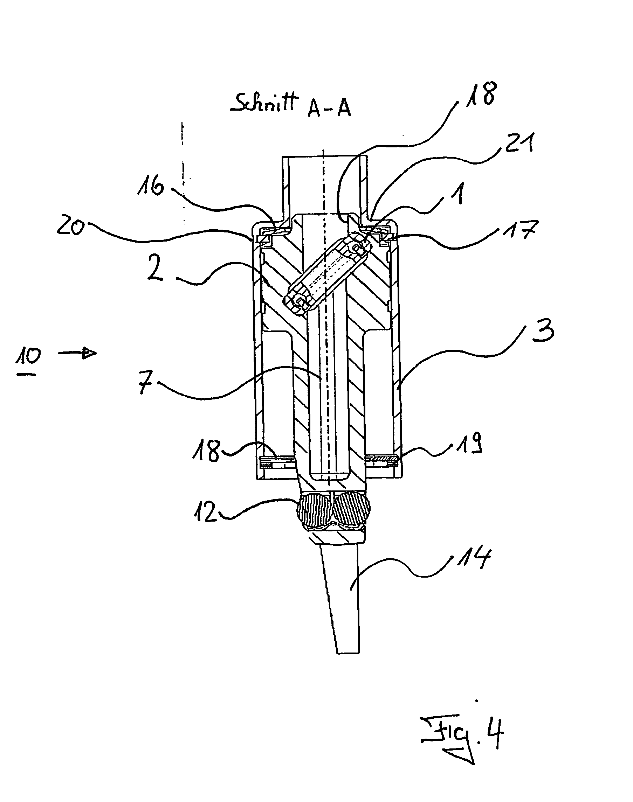

Ein Schnitt gemäß Schnittebene A-A dieser Anordnung ist in Fig. 4 gezeigt. Aus der Schnittdarstellung gemäß Fig. 4 ist das Getriebegehäuse 2 (die Stellereinheit) ersichtlich. Die Stellereinheit ist zweigeteilt und nimmt das Spindellager 1 auf, wobei dieses im Verhältnis zur Spindelachse der Spindel 7 schräggestellt ist. Eine hintere Stufe 21 des Führungsrohres 3 (des umgebungsfesten Trägerelementes) bildet eine Abstützungsfläche für eine Tellerfeder 16. Ein Stützring 16 ist axial und verdrehsicher im Führungsrohr 3 fixiert. Der Stützring spannt die Tellerfeder 16 vor, indem er ein radial äußeres Ende der Tellerfeder 16 in Richtung der Abstützungsfläche verschiebt. Die Tellerfeder 16 in Verbindung mit dem Stützring 20 bildend daher den (feder-)vorbelasteten, d.h. vorspannten, hinteren Endanschlag für das Getriebegehäuse 2 (die Stellereinheit).

Der vordere Endanschlag wird durch eine Scheibe 18 in Verbindung mit den Sicherungselementen 19 gebildet. Auch die Verbindung zwischen Scheibe 18 und Sicherungselement 19 kann einen elastischen Anschlag bilden. Das Getriebegehäuse 2 ist an dessen vorderen Ende mit der Rolleneinheit 12 verbunden, welches in den Führungen 14 geführt ist.

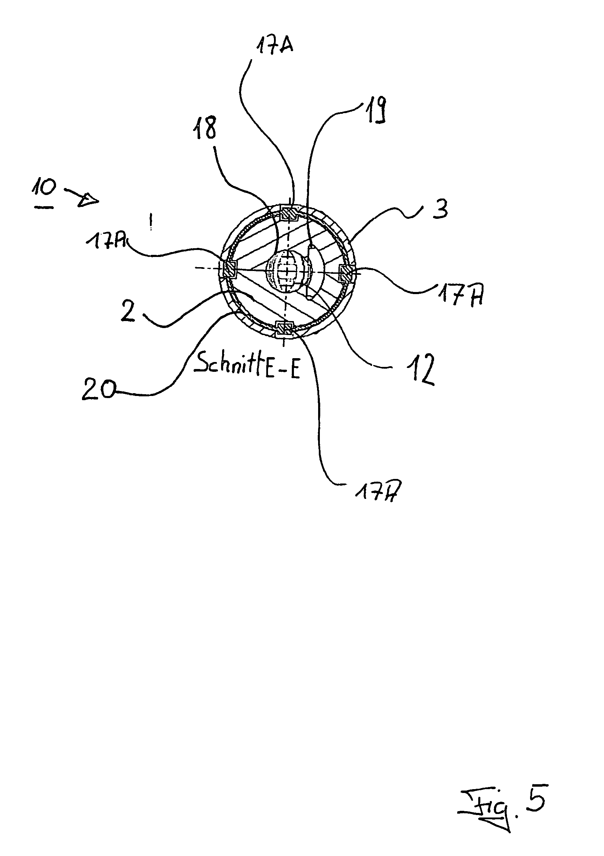

Fig. 5 zeigt eine Schnittdarstellung entsprechend dem Schnitt E-E, wie in Fig. 3 gezeigt. Aus dieser Schnittdarstellung zeigt sich der im Grundsatz ringförmige Aufbau des Stützelementes 17, wobei vier verdickte Bereiche 17A vorgesehen sind, welche in Nuten oder Ausnehmungen eingreifen, die im Führungsrohr 3 ausgebildet sind. Die Nuten bzw. Ausnehmungen in Verbindung mit dem Führungsrohr sichern den Stützring 17 axial gegen Bewegung. Entsprechend kann der Stützring zur Ausbildung der Vorspannung auf das Federelement verwendet werden, indem er diesen gegen das Führungsrohr verspannt.

Der Stützring weist zudem eine Öffnung 20, um den Stützring 17 in die Nuten des Führungsrohres 3 einzuclipsen und um ihn radial vorzuspannen.

Fig. 5 zeigt zudem die Bohrung im Getriebegehäuse 2 durch welche die Spindel 7 hindurchgreift. Da die Spindel 7 aus Vereinfachungsgründen in Fig. 5 nicht gezeigt ist, ist in Fig. 5 teilweise die Rolleneinheit 12 sichtbar.

Die Schnittdarstellung nach Fig. 5 enthält zudem die Ausnehmung 19 des Getriebegehäuses 2 als einem Teil der Aufnahme des Spindellagers 1.

Der verdickte Bereiche 17A des Stützelementes 17 sowie die Nut in der diese jeweils aufgenommen sind, sind auch in Fig. 3 gezeigt. Selbstverständlich kann auch eine andere Anzahl an verdickten Bereichen und ein Stützelement ohne Öffnung verwendet werden ohne von der vorliegenden Lehre abzuweichen.

Beim Anschlagen am hinteren Anschlag (also der Stufe 21 des Führungsrohres 3) trifft die Stellereinheit (das Getriebegehäuse 2) auf die nicht abgestützten Bereiche der vorgespannten Tellerfeder (elastischer Anschlag 16) und wird verzögert.

Die Tellerfeder stützt sich dabei über den Stützring 17 am umgebungsfesten Trägerelement 3 ab, wodurch eine Vorspannung entsteht. Aufgrund der Vorspannung erfolgt eine Verformung der Tellerfeder erst, wenn eine gewisse Mindestkraft überschritten wird. Diese Mindestkraft liegt oberhalb der maximal zu erwartenden Referenzierkraft.

Die vorliegende Beschreibung offenbart insbesondere ein Ausführungsbeispiel eines elastischen und vorgespannten Endanschlages in Form eines federvorgespannten Endanschlages, wobei das Federelement vorzugsweise eine oder mehrere in Reihe angeordnete Tellerfedern aufweist.

Das Federelement ist vorzugsweise an einem umgebungsfesten Trägerelement angebracht und nicht an der bewegten Stellereinheit wegen der zusätzlichen Massenträgheit.

Das vorgespannte Federelement stützt sich in Einbaulage vorzugsweise ausschließlich am Trägerelement ab. Alternativ hierzu kann das vorgespannte Federelement sich in Einbaulage am Trägerelement über ein zusätzliches Bauteil abstützen, wobei das zusätzliche Bauteil, d.h. der Stützring, vorzugsweise gegen das Trägerelement in radialer Richtung federvorgespannt ist. Zudem ist das zusätzliche Bauteil, d.h. der Stützring, vorzugsweise über eine oder mehrere Nuten im Trägerelement in axialer Richtung positioniert und abgestützt.

Die Tellerfeder stützt sich vorzugsweise über eine oder mehrere Stützstellen am Stützring ab.

Zudem ist die Tellerfeder vorzugsweise im Trägerelement zentriert.

Die Tellerfeder kann außerdem vorzugsweise reibungsbehaftet im Trägerelement positioniert sein.

Die Stellereinheit selbst ist vorzugsweise im Trägerelement in Umfangsrichtung über Führungsstege 22 positioniert.

Der Stützring ist vorzugsweise im Trägerelement in Umfangsrichtung über eine Nut positioniert. Der Stützring weist vorzugsweise weiterhin in Umfangsrichtung eine Öffnung auf.

### Bezugszeichenliste

- 1: schräggestelltes Lager
- 2: Getriebegehäuse
- 3: Führungsrohr
- 4: topfförmiges Gehäuse
- 5: Festlager
- 6: Gewindemutter
- 7: Motorgetriebewelle
- 8: Rotor
- 9: Motoreinheit
- 11: seitliche Abstützung
- 12: Rolleneinheit
- 13: Faltenbalg
- 14: Führung
- 15: Bund
- 16: Tellerfeder
- 17: Stützring
- 17a: verdickter Bereich
- 18: Scheibe
- 19: Sicherungselement
- 20: Öffnung
- 21: hintere Stufe

## Patentansprüche

1. Elektromotorische Antriebseinheit (10) zum Betätigen einer Drehmomentübertragungseinrichtung, wie Kupplung oder Bremseinrichtung, mit einer Motoreinheit (9), einer mit der Motoreinheit (9) verbundenen Stellereinheit (2), einer mit der Stellereinheit (2) verbundenen Rolleneinheit (12) und einem Trägerelement (3), wobei die Stellereinheit (2) gegenüber dem Trägerelement (3) bewegbar angeordnet ist, und wobei ein Bewegungsweg der Stellereinheit (2) in Richtung Motoreinheit (9) durch einen elastischen Endanschlag (20) zur Reduktion der Anschlagslasten begrenzt ist, wobei der Endanschlag (20) aus einem elastischen Element besteht, das am Trägerelement (3) abgestützt ist, **dadurch gekennzeichnet, dass** das elastische Element (20) vorgespannt ist.

2. Elektromotorische Antriebseinheit nach Anspruch 1, wobei das elastische Element über einen Stützring vorgespannt ist, der am Trägerelement zumindest axial fixiert ist.

3. Elektromotorische Antriebseinheit nach Anspruch 2, wobei der Stützring verdrehsicher am Führungselement angeordnet und/oder in radialer Richtung vorgespannt ist.

4. Elektromotorische Antriebseinheit nach einem der Ansprüche 1 bis 3, wobei als elastisches Element ein ringförmiges Dichtungselement, eine Tellerfeder (17) und/oder mehrere in Reihe geschaltete Tellerfedern vorgesehen sind.

5. Elektromotorische Antriebseinheit nach einem der Ansprüche 1 bis 4, wobei die Stellereinheit jedenfalls teilweise im Trägerelement bewegbar aufgenommen ist, so daß das Trägerelement als Führungselement für die Stellereinheit wirkt.

6. Elektromotorische Antriebseinheit nach einem der Ansprüche 1 bis 5, wobei die Getriebeeinheit einen Gewindetrieb aufweist, der in der Stellereinheit aufgenommen ist, und wobei die Stellereinheit im Trägerelement bewegbar aufgenommen und über den Gewindetrieb antreibbar ist.

7. Elektromotorische Antriebseinheit nach einem der Ansprüche 1 bis 6, wobei ein Endanschlag in Richtung der Rolleneinheit vorgesehen ist.

8. Elektromotorische Antriebseinheit nach einem der Ansprüche 1 bis 7, wobei der Endanschlag in Richtung der Rolleneinheit elastisch abgestützt ist.

9. Betätigungssystem zum Betätigen insbesondere von Doppelkupplungen, mit einem Hebelaktor mit einer elektromotorischen Antriebseinheit nach einem der Ansprüche 1 bis 8.

## Claims

1. Electromotive drive unit (10) for operating a torque transmission device, such as a clutch or braking device, having a motor unit (9), an actuator unit (2) which is connected to the motor unit (9), a roller unit (12) which is connected to the actuator unit (2), and a carrier element (3), wherein the actuator unit (2) is arranged such that it can move in relation to the carrier element (3), and wherein a movement path of the actuator unit (2) is limited in the direction of the motor unit (9) by an elastic end stop (20) for the purpose of reducing the loads on the stop, wherein the end stop (20) comprises an elastic element which is supported on the carrier element (3), **characterized in that** the elastic element (20) is prestressed.

2. Electromotive drive unit according to Claim 1, wherein the elastic element is prestressed by means of a supporting ring which is at least axially fixed to the carrier element.

3. Electromotive drive unit according to Claim 2, wherein the supporting ring is arranged on the guide element such that it cannot rotate and/or is prestressed in the radial direction.

4. Electromotive device unit according to one of Claims 1 to 3, wherein the elastic element provided is an annular sealing element, a plate spring (17) and/or a plurality of plate springs which are connected in series.

5. Electromotive drive unit according to one of Claims 1 to 4, wherein the actuator unit is accommodated such that it can move, at any rate partially, in the carrier element, and therefore the carrier element acts as a guide element for the actuator unit.

6. Electromotive drive unit according to one of Claims 1 to 5, wherein the gear mechanism unit has a screw drive which is accommodated in the actuator unit, and wherein the actuator unit is accommodated in the carrier element such that it can move, and can be driven by means of the screw drive.

7. Electromotive drive unit according to one of Claims 1 to 6, wherein an end stop is provided in the direction of the roller unit.

8. Electromotive drive unit according to one of Claims 1 to 7, wherein the end stop is elastically supported in the direction of the roller unit.

9. Operating system for operating, in particular, double clutches, having a lever actuator having an electromotive drive unit according to one of Claims 1 to 8.

## Revendications

1. Unité d'entraînement électromotrice (10) pour l'actionnement d'un dispositif de transfert de couple, comme un embrayage ou un dispositif de freinage, comprenant une unité motrice (9), une unité de réglage (2) connectée à l'unité motrice (9), une unité de roulement (12) connectée à l'unité de réglage (2) et un élément de support (3), l'unité de réglage (2) étant disposée de manière déplaçable par rapport à l'élément de support (3), et une course de déplacement de l'unité de réglage (2) dans la direction de l'unité motrice (9) étant limitée par une butée de fin de course élastique (20) pour réduire les contraintes de choc, la butée de fin de course (20) étant constituée par un élément élastique qui est supporté sur l'élément de support (3), **caractérisée en ce que** l'élément élastique (20) est précontraint.

2. Unité d'entraînement électromotrice selon la revendication 1, dans laquelle l'élément élastique est précontraint par une bague de support qui est fixée au moins axialement sur l'élément de support.

3. Unité d'entraînement électromotrice selon la revendication 2, dans laquelle la bague de support est disposée de manière solidaire en rotation sur l'élément de guidage et/ou est précontrainte dans la direction radiale.

4. Unité d'entraînement électromotrice selon l'une quelconque des revendications 1 à 3, dans laquelle on prévoit comme élément élastique un élément d'étanchéité de forme annulaire, un ressort Belleville (17) et/ou plusieurs ressorts Belleville montés en rangée.

5. Unité d'entraînement électromotrice selon l'une quelconque des revendications 1 à 4, dans laquelle l'unité de réglage est reçue de manière mobile à chaque fois en partie dans l'élément de support, de sorte que l'élément de support agisse en tant qu'élément de guidage pour l'unité de réglage.

6. Unité d'entraînement électromotrice selon l'une quelconque des revendications 1 à 5, dans laquelle l'unité de transmission présente une vis d'entraînement, qui est reçue dans l'unité de réglage, l'unité de réglage étant reçue de manière mobile dans l'élément de support et pouvant être entraînée par le biais de la vis d'entraînement.

7. Unité d'entraînement électromotrice selon l'une quelconque des revendications 1 à 6, dans laquelle une butée de fin de course est prévue dans la direction de l'unité de roulement.

8. Unité d'entraînement électromotrice selon l'une quelconque des revendications 1 à 7, **caractérisée en ce que** la butée de fin de course est supportée élastiquement dans la direction de l'unité de roulement.

9. Système d'actionnement pour l'actionnement notamment de doubles embrayages, comprenant un actionneur à levier avec une unité d'entraînement électromotrice selon l'une quelconque des revendications 1 à 8.
